# FASCICULE DE BREVET EUROPEEN

(11) **EP 3 029 351 B1**
(45) Date de publication et mention de la délivrance du brevet: **05.06.2019**
(21) Numéro de dépôt: 15196474.9
(22) Date de dépôt: 26.11.2015
(51) Int. Cl.: B60K 5/12, F16F 13/10, F16F 13/26

(54) **SUPPORT ANTIVIBRATOIRE HYDRAULIQUE PILOTABLE**
STEUERBARES HYDRAULISCHES SCHWINGUNGSDÄMPFENDES LAGER
CONTROLLABLE HYDRAULIC ANTI-VIBRATION MOUNTING

(30) Priorité: 02.12.2014 FR 1461789
(43) Date de publication de la demande: 08.06.2016
(73) Titulaire: HUTCHINSON, 75008 Paris (FR)
(72) Inventeur: LEMAIRE, Gabriel, 28200 Saint-Denis-les-Ponts (FR); COUDIERE, Franck, 45190 CRAVANT (FR)
(74) Mandataire: Cabinet Plasseraud

(56) Documents cités:
- GB-A- 2 164 416
- US-A- 4 693 455
- US-A- 4 901 986
- US-A1- 2006 006 593

## Description

La présente invention est relative aux supports antivibratoires hydrauliques pilotables.

Plus particulièrement, l'invention concerne un support antivibratoire hydraulique pilotable destiné à être interposé aux fins d'amortissement entre des premier et deuxième éléments rigides, ce support antivibratoire comprenant :
- des première et deuxième armatures destinées à être fixées aux deux éléments rigides à réunir, la première armature ayant la forme d'un plot et la deuxième armature ayant une forme annulaire centrée sur un axe central, la première armature étant disposée sensiblement sur ledit axe central,
- un corps en élastomère qui relie entre elles les première et deuxième armatures et qui délimite au moins partiellement une chambre de travail, le corps en élastomère présentant une forme en cloche, ayant un sommet solidaire de la première armature et une base annulaire solidaire de la deuxième armature,
- une chambre de compensation déformable qui communique avec la chambre de travail par l'intermédiaire d'un passage étranglé, la chambre de compensation, la chambre de travail et le premier passage étranglé formant un volume hydraulique rempli de liquide, le premier passage étranglé ayant une fréquence de résonance comprise entre 5 et 20 Hz,
- une chambre auxiliaire,
- un clapet de découplage comprenant une membrane de découplage en élastomère qui sépare la chambre de travail et la chambre auxiliaire, ledit clapet de découplage étant adapté pour absorber des vibrations à certaines fréquences supérieures à 20 Hz,
- un dispositif de commande comportant un actionneur adapté pour sélectivement bloquer la membrane de découplage.

Le document EP-A-0115417 décrit un support antivibratoire de ce type, dans lequel la chambre auxiliaire, le clapet de découplage et le dispositif de commande sont disposés au niveau de la chambre hydraulique de compensation.

Par ailleurs, US4901986A décrit un ensemble de support hydraulique ayant une cloison formant deux chambres hydrauliques et ayant un découpleur. Une chambre primaire est formée par un organe élastomère et une chambre secondaire est définie par un diaphragme élastique. Une poche pneumatique expansible est montée dans la chambre primaire. En commandant la poche, on peut réduire la raideur dynamique du support aux fréquences supérieures à 20 Hz.

Enfin, US4712777A1 décrit un isolateur antivibratoire rempli de fluide ayant deux chambres séparées par une cloison dans laquelle est formé un passage à inertie coopérant avec un découpleur. Des moyens sont prévus pour faire varier la raideur d'une des chambres pour régler certaines caractéristiques de fonctionnement dynamique.

Le domaine de protection est uniquement défini par les revendications.

La présente invention a notamment pour objet de perfectionner les supports antivibratoires du type ci-dessus, notamment pour en diminuer l'encombrement représenté par la fonction de découplage pilotable.

A cet effet, dans un support antivibratoire du genre en question, la chambre auxiliaire et le clapet de découplage sont disposés dans la première armature, le dispositif de commande étant porté par ladite première armature,
la première armature comportant un évidement qui reçoit le dispositif de commande, l'évidement de la première armature s'étendant selon l'axe central entre des première et deuxième extrémités débouchant respectivement dans la chambre de travail et à l'air libre, la première extrémité étant obturée par la membrane de découplage,
et le dispositif de commande comportant un boîtier qui est emboîté dans ledit évidement et comporte un fond délimitant la chambre auxiliaire avec la membrane de découplage.

Grâce à ces dispositions, la chambre auxiliaire, le clapet de découplage et le dispositif de commande n'interfèrent plus avec l'espace dévolu à la chambre de compensation, ce qui permet soit de rendre le support antivibratoire plus compact (notamment en hauteur), soit de prévoir des fonctions supplémentaires (par exemple un clapet de découplage supplémentaire entre la chambre de travail et la chambre de compensation) sans augmenter sensiblement l'encombrement du support antivibratoire.

Dans divers modes de réalisation du support antivibratoire selon l'invention, on peut éventuellement avoir recours en outre à l'une et/ou à l'autre des dispositions suivantes :
- le dispositif de commande est également contenu dans la première armature ;
- la membrane de découplage est formée d'une seule pièce avec le corps en élastomère ;
- la chambre auxiliaire est une chambre pneumatique et le dispositif de commande est adapté pour sélectivement soit mettre à l'air libre ladite chambre auxiliaire, soit vider ladite chambre auxiliaire de façon à bloquer ladite membrane de découplage ;
- le dispositif de commande comporte un clapet de sortie d'air autorisant normalement uniquement la sortie d'air depuis la chambre auxiliaire vers l'atmosphère et non l'inverse, et un dispositif de mise à l'air actionnable pour sélectivement mettre à l'air libre ladite chambre auxiliaire ;
- le clapet de sortie d'air et le dispositif de mise à l'air sont contenus dans un logement délimité par le boîtier du dispositif de commande, ce logement étant ouvert à l'opposé du fond et recouvert par un couvercle fixé sur la première armature.

Par ailleurs, l'invention a également pour objet un véhicule automobile comportant un moteur, une caisse et au moins un support antivibratoire tel que défini ci-dessus pour relier le moteur à la caisse.

Selon une première forme de réalisation, la première armature est liée au moteur, la deuxième armature est liée à la caisse, et la première armature étant disposée au-dessus de la deuxième armature (cette première forme de réalisation permet notamment que le corps en élastomère filtre les bruits de commutation du dispositif de commande, de façon que ces bruits ne soient pas transmis à la caisse du véhicule).

Selon une deuxième forme de réalisation, la deuxième armature est liée au moteur, la première armature est liée à la caisse, et la deuxième armature est disposée au-dessus de la première armature (cette deuxième forme de réalisation permet notamment que le corps en élastomère filtre les bruits de fonctionnement hydraulique du passage étranglé, de façon que ces bruits ne soient pas transmis à la caisse du véhicule).

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue schématique d'un véhicule automobile dont le moteur est relié à la caisse par au moins un support antivibratoire selon une première forme de réalisation de l'invention,
- la figure 2 1 est une vue en perspective du support antivibratoire selon la première forme de réalisation de l'invention,
- les figures 3 et 4 sont des vues éclatées en perspective du support antivibratoire de la figure 2, vu selon deux directions différentes,
- la figure 5 est une vue en coupe axiale du support antivibratoire de la figure 2, et
- la figure 6 est une vue en coupe similaire à la figure 5, dans une deuxième forme de réalisation de l'invention.

Sur les différentes figures, les mêmes références désignent des éléments identiques ou similaires.

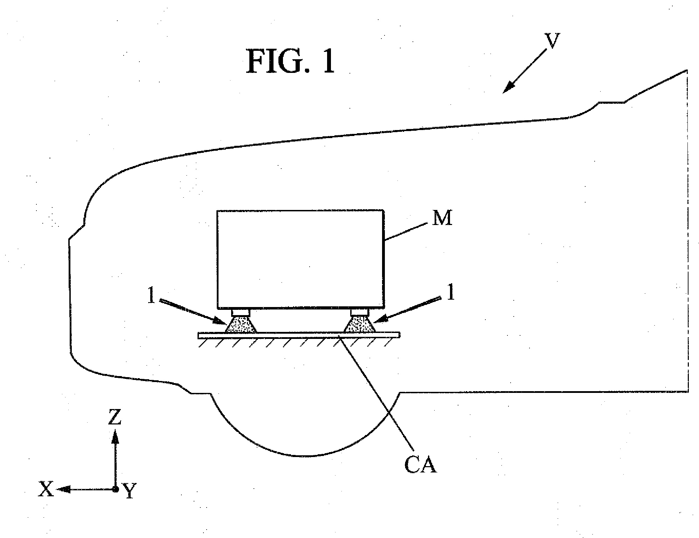

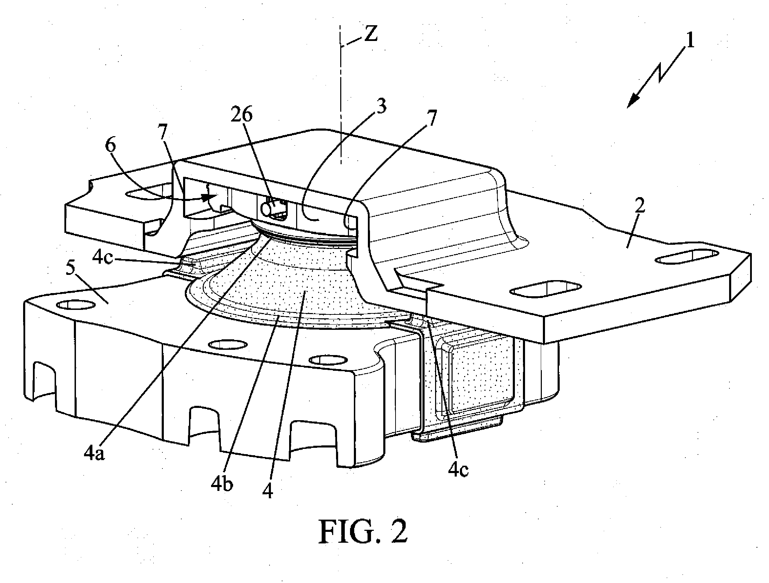

La figure 1 représente un véhicule automobile V dont le moteur M est relié à la caisse CA par au moins un support antivibratoire 1, notamment pilotable, dont une forme de réalisation est représentée sur la figure 2.

Le support antivibratoire hydraulique pilotable 1 de la figure 2, comporte :
- une première armature rigide 3 présentant par exemple la forme d'un plot métallique ou en matière plastique, destinée par exemple à être fixée au moteur M du véhicule directement ou par l'intermédiaire d'un organe de fixation 2,
- un corps en élastomère 4 capable de supporter notamment les efforts statiques dus au poids du moteur M du véhicule, ce corps en élastomère pouvant présenter par exemple une forme de cloche qui s'étend axialement selon un axe central Z par exemple vertical, entre un sommet 4a adhérisé et surmoulé sur la première armature 3 et une base annulaire 4b surmoulée et adhérisée sur la deuxième armature 5,
- une deuxième armature rigide 5, par exemple une armature annulaire en métal ou matière plastique, qui est destinée à être fixée par exemple à la caisse CA du véhicule, directement par l'intermédiaire d'au moins un organe de fixation (non représenté). La deuxième armature est disposée sous la première armature 3 dans l'exemple considéré.

Dans l'exemple considéré, l'organe de fixation 2 peut notamment se présenter sous la forme d'une platine, notamment sensiblement perpendiculaire à l'axe central Z.

L'organe de fixation 2 peut éventuellement comporter un logement 6 qui reçoit la partie externe de la première armature 3 (c'est-à-dire la partie supérieure dans l'exemple de la figure 2).

Par exemple, le logement 6 peut être formé par embouti de l'organe de fixation 2, débouchant latéralement pour permettre l'emboîtement latéral de la première armature dans le logement 6.

Le logement 6 peut former notamment une glissière formée par exemple par deux rainures latérales 7, dans lesquelles s'emboîtent des parties latérales correspondantes de la première armature 3.

Eventuellement, l'organe de fixation 2 peut recouvrir une partie de la deuxième armature 5, laquelle peut s'étendre sensiblement parallèlement à l'organe de fixation 2. La deuxième armature peut porter une ou plusieurs butées 4c coopérant avec l'organe de fixation 2 pour limiter les débattements de la première armature 3 vers la deuxième armature 5. La ou les butées 4c peuvent être en élastomère, par exemple moulées d'une pièce avec le corps en élastomère 4.

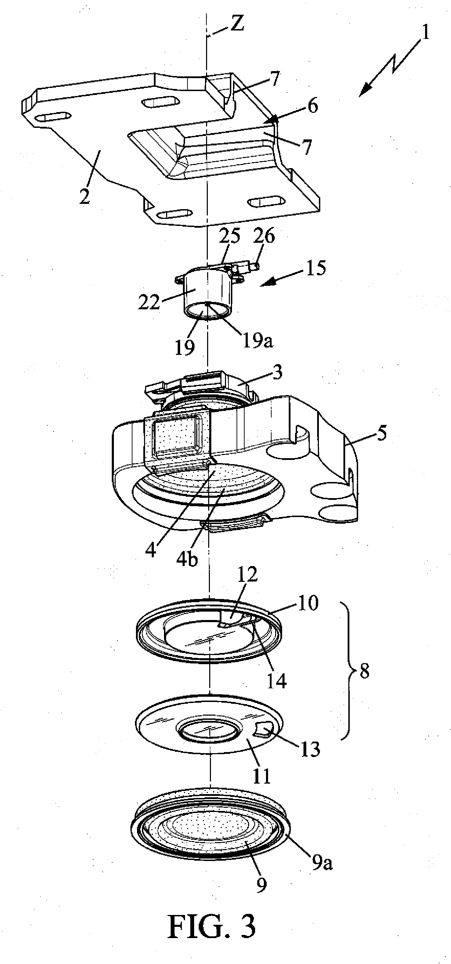

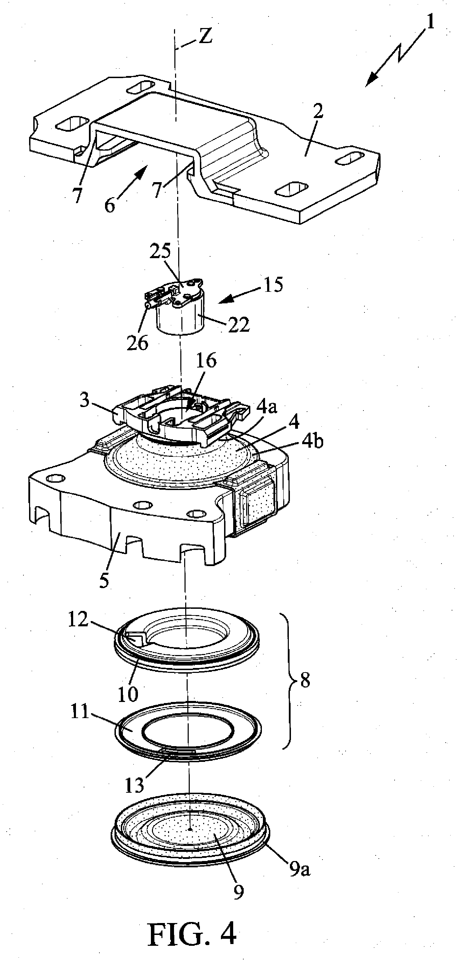

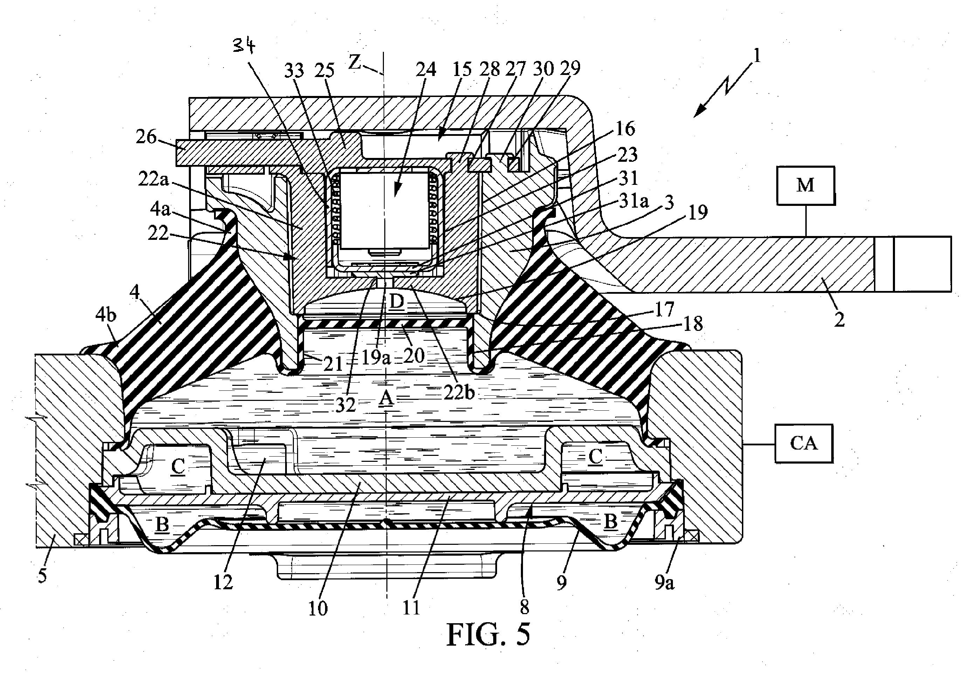

Comme représenté sur les figures 3 à 5, le support antivibratoire 1 comporte en outre une cloison rigide 8 solidarisée avec la deuxième armature 5 et appliquée de façon étanche contre la base 4b du corps en élastomère, en délimitant avec celui-ci une chambre de travail A hydraulique. Une membrane souple en élastomère 9 formant soufflet, est appliquée de façon étanche contre la cloison 8 à l'opposé de la chambre de travail A, en délimitant avec ladite cloison 8 une chambre de compensation B hydraulique qui communique avec la chambre de travail A par un passage étranglé C. La chambre de travail, la chambre de compensation B et le passage étranglé C forment ensemble un volume hydraulique rempli de liquide, notamment du glycol ou autre.

Le passage étranglé C est dimensionné pour présenter une fréquence de résonance comprise entre 5 et 20 Hz, typiquement entre 8 et 12 Hz.

La cloison rigide 8 peut être par exemple constituée par superposition de deux plaques 10, 11 qui délimitent entre elles un canal en arc de cercle formant le passage étranglé C. Le passage étranglé C débouche dans la chambre de travail A par une découpe 12 ménagée dans la plaque 10 et dans la chambre de compensation B par une découpe 13 ménagée dans la plaque 11.

Les plaques 10, 11 comportent des moyens pour que le liquide qui circule dans le passage étranglé C suive tout le trajet du canal en arc de cercle susmentionné. Dans l'exemple considéré, ces moyens peuvent consister en une nervure 14 de la plaque 10, qui est interposée angulairement entre les découpes 12, 13.

La périphérie de la membrane souple 9 peut être surmoulée et adhérisée sur une bague de renfort 9a qui est par exemple soudée ou fixée autrement à la deuxième armature 5.

Le support antivibratoire 1 comporte en outre une chambre auxiliaire D, contenue dans la première armature 3. La chambre auxiliaire peut être une chambre pneumatique.

Le support antivibratoire 1 comporte en outre un clapet de découplage disposé dans la première armature 3. Le clapet de découplage comprend une membrane de découplage 20 en élastomère qui sépare la chambre de travail A et la chambre auxiliaire D. Ledit clapet de découplage est adapté pour absorber des vibrations à certaines fréquences supérieures à 20 Hz. Avantageusement, la membrane de découplage 20 est formée d'une seule pièce avec le corps en élastomère 4.

Le support antivibratoire 1 comporte également un dispositif de commande 15 porté par la première armature 3, adapté pour sélectivement bloquer la membrane de découplage 20, de façon à neutraliser l'action du clapet de découplage dans certaines conditions de fonctionnement du véhicule. Le dispositif de commande 15 est de préférence également contenu dans la première armature 3.

Avantageusement, la première armature 3 comporte un évidement 16 qui reçoit le dispositif de commande 15. L'évidement 16 de la première armature s'étend selon l'axe central Z entre des première et deuxième extrémités débouchant respectivement dans la chambre de travail A (vers le bas dans l'exemple des figures 2-5) et à l'air libre (vers le haut dans l'exemple des figures 2-5), la première extrémité étant obturée par la membrane de découplage 20.

L'évidement logement 16 peut présenter une forme générale cylindrique, par exemple cylindrique de révolution centrée sur l'axe Z. L'évidement 16 peut présenter une partie 18 de section réduite au voisinage de la première extrémité dudit logement, qui délimite un épaulement 17 orienté vers la deuxième extrémité dudit logement.

Le dispositif de commande 15 peut être adapté pour sélectivement soit mettre à l'air libre la chambre auxiliaire D, soit vider ladite chambre auxiliaire D de façon à bloquer la membrane de découplage 20.

Le dispositif de commande 15 peut comporter un boîtier 22 qui est emboîté dans l'évidement 16 à partir de la deuxième extrémité dudit évidement. Le boîtier 22 peut être en appui sur l'épaulement 17 susmentionné. Le boîtier 22 peut être réalisé en matière plastique ou autre. Il peut comporter une paroi latérale annulaire 22a et un fond 22b, lequel fond 22b délimite la chambre auxiliaire D avec la membrane de découplage 20. Avantageusement, le fond 22b peut former une cuvette 19 en regard de la membrane de découplage 20.

Le fond 22b du boîtier 22 peut être percé d'au moins un trou 19a, ménagé par exemple au centre de la cuvette 19. Ce trou 19a fait communiquer la chambre auxiliaire D avec un logement 23 délimité par la paroi latérale 22a et le fond 22b. Le logement 23 peut être ouvert vers la deuxième extrémité du logement 16, c'est-à-dire à l'opposé de la chambre auxiliaire D.

Le dispositif de commande 15 peut comporter un clapet de sortie d'air 31-33 autorisant normalement uniquement une sortie d'air depuis la chambre auxiliaire D vers l'atmosphère et non l'inverse, et un dispositif de mise à l'air 24 actionnable pour sélectivement mettre à l'air libre ladite chambre auxiliaire D.

Le clapet de sortie d'air 31-33 peut comporter par exemple un organe de clapet 31 qui est disposé dans le logement 23 du boîtier 22 et qui est sollicité élastiquement par un ressort 33 de façon à être appliqué contre un siège de clapet 32. Dans l'exemple considéré ici, le siège de clapet 32 est formé sur la face du fond 22b disposée à l'opposé de la chambre auxiliaire D.

L'organe de clapet 31 peut être réalisé au moins en au moins une partie en matériau ferromagnétique et peut comporter un joint 31a en élastomère ou autre, adapté pour s'appliquer avec étanchéité contre le siège de clapet 32.

Le dispositif de mise à l'air 24 peut être notamment un électro-aimant, relié par exemple par un connecteur électrique 26 à des moyens de commande externes appartenant au véhicule, tels que le calculateur de bord (non représenté). L'électro-aimant 24 peut être disposé dans le logement 23 du boîtier 22. Sur commande du calculateur de bord, l'électro-aimant 24 produit un champ magnétique qui déplace l'organe de clapet 31 en l'écartant du siège de clapet 32, ce qui met la chambre auxiliaire D en communication avec l'atmosphère. On notera que l'électro-aimant 24 pourrait être remplacé par tout autre actionneur, notamment électrique ou pneumatique, adapté pour sélectivement bloquer et débloquer la membrane de découplage 20.

L'électro-aimant 24 peut être par exemple solidaire d'une cage 34 métallique ou autre, qui est emboîtée dans le logement 23 du boîtier 22 et qui peut servir de guide à l'organe de clapet 31.

Le logement 23 du boîtier 22 peut être recouvert, à l'opposé du fond 22b, par un couvercle 25. Le couvercle 25 peut être réalisé en matière plastique ou autre ; il peut éventuellement comporter le connecteur électrique 26 susmentionné.

Le couvercle 25 peut être fixé sur la première armature 3 et / ou sur le boîtier 22. Dans l'exemple considéré, le couvercle 25 est fixé à la fois sur la première armature 3 et sur le boîtier 22, par exemple par un ou plusieurs rivets 28 appartenant au boîtier 22 et traversant chacun un trou correspondant 27 du couvercle, et par un ou plusieurs rivets 30 appartenant à la première armature 3 et traversant chacun un trou correspondant 29 du couvercle.

Le dispositif qui vient d'être décrit fonctionne comme suit.

Lorsque le moteur M du véhicule fonctionne dans certaines conditions prédéfinies, par exemple au ralenti, le calculateur de bord du véhicule active l'électro-aimant 24 pour provoquer l'ouverture du clapet de sortie d'air 31, 32, de sorte que la chambre auxiliaire D communique avec l'atmosphère, ce qui permet à la membrane de découplage 20 de se déplacer librement : dans ce mode de fonctionnement, les vibrations du moteur M sont transmises à la chambre de travail A par le corps en élastomère 4, ce qui provoque des fluctuations du volume de ladite chambre de travail. Ces fluctuations de fréquence supérieures à 20 Hz et de relativement faible amplitude, sont absorbées par la membrane de découplage 20.

Dans d'autres conditions prédéterminées, par exemple pendant le roulage du véhicule (c'est-à-dire notamment lorsque le régime moteur est supérieur à une certaine limite prédéterminée), le calculateur de bord du véhicule cesse d'activer l'électro-aimant 24, de sorte que le clapet de sortie d'air 31-33 revient en position de fermeture sous l'action du ressort 33. Dans ce mode de fonctionnement, les déplacements vibratoires du moteur M, de relativement grande amplitude et de fréquence généralement comprise entre 5 et 20 Hz, notamment entre 8 et 12 Hz (mouvements dits de « hachis »), se traduisent par des variations de volume de relativement grande amplitude de la chambre de travail A, qui entraînent des déformations de la chambre de compensation B, de sorte que le passage étranglé C est alors le siège de phénomènes de résonance permettant un amortissement des vibrations dans de bonnes conditions.

De plus, au début de l'établissement de ce mode de fonctionnement, la chambre auxiliaire D contient encore de l'air, de sorte que la membrane de découplage 20 peut se déplacer, mais ces mouvements chassent l'air de la chambre auxiliaire D au travers du clapet de sortie d'air 31-33. Lorsque quasiment tout l'air contenu dans la chambre auxiliaire D a été chassé, la membrane de découplage 20 reste sensiblement plaquée contre le fond 22b du boîtier 22, et le clapet de découplage est donc désactivé dans ce mode de fonctionnement.

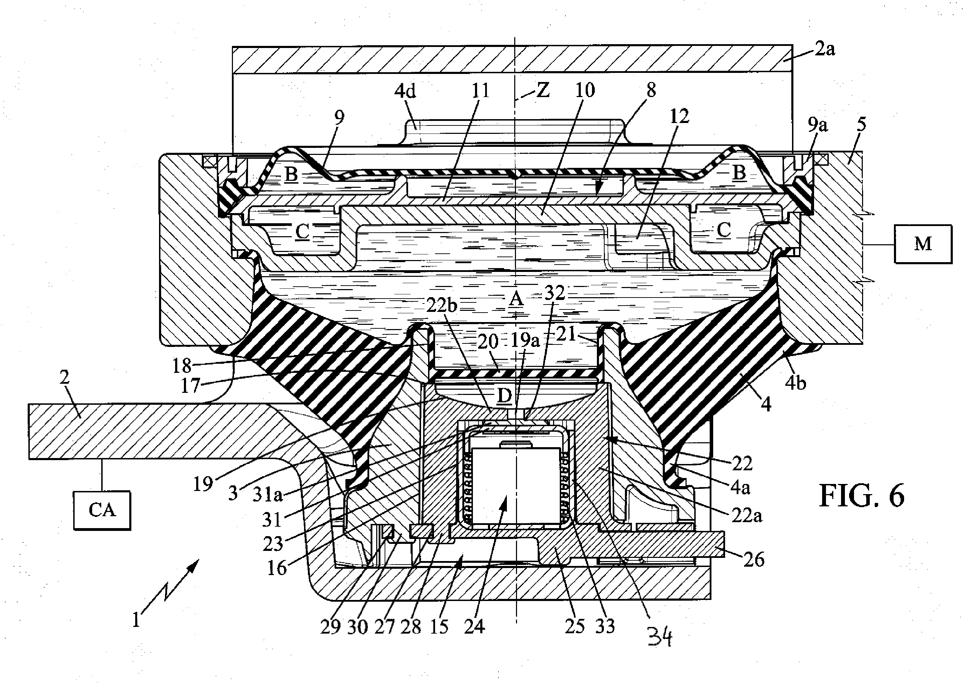

La deuxième forme de réalisation de l'invention, représentée sur la figure 6, est similaire à la première forme de réalisation tans dans sa structure que dans son fonctionnement, de sorte que cette deuxième forme de réalisation ne sera pas décrite en détail.

Cette deuxième forme de réalisation se distingue de la première forme de réalisation par le fait que la deuxième armature 5 est liée au moteur M du véhicule, la première armature 3 est liée à la caisse CA du véhicule, et la deuxième armature 5 est disposée au-dessus de la première armature 3. Dans cette deuxième forme de réalisation, la platine 2 peut être solidaire d'un étrier limiteur 2a qui recouvre la deuxième armature 5 vers le haut et limite les débattements de ladite deuxième armature 5 par rapport à la première armature 3. La deuxième armature 5 peut éventuellement comporter un ou des bossages en élastomère 4d, éventuellement moulés d'une pièce avec le corps en élastomère 4, qui coopèrent par butée avec la face inférieure de l'étrier limiteur 2a.

## Revendications

1. Support antivibratoire hydraulique pilotable destiné à être interposé aux fins d'amortissement entre des premier et deuxième éléments rigides (M, CA), ce support antivibratoire comprenant :
- des première et deuxième armatures (3,5) destinées à être fixées aux deux éléments rigides à réunir, la première armature (3) ayant la forme d'un plot et la deuxième armature (5) ayant une forme annulaire centrée sur un axe central (Z), la première armature (3) étant disposée sensiblement sur ledit axe central (Z),
- un corps en élastomère (4) qui relie entre elles les première et deuxième armatures (3,5) et qui délimite au moins partiellement une chambre de travail (A), le corps en élastomère (4) présentant une forme en cloche, ayant un sommet (4a) solidaire de la première armature (3) et une base annulaire (4b) solidaire de la deuxième armature (5),
- une chambre de compensation (B) déformable qui communique avec la chambre de travail (A) par l'intermédiaire d'un passage étranglé (C), la chambre de compensation (B), la chambre de travail (A) et le premier passage étranglé (C) formant un volume hydraulique rempli de liquide, le premier passage étranglé ayant une fréquence de résonance comprise entre 5 et 20 Hz,
- une chambre auxiliaire (D),
- un clapet de découplage comprenant une membrane de découplage (20) en élastomère qui sépare la chambre de travail (A) et la chambre auxiliaire (D), ledit clapet de découplage étant adapté pour absorber des vibrations à certaines fréquences supérieures à 20 Hz,
- un dispositif de commande (15) comportant un actionneur (24) adapté pour sélectivement bloquer la membrane de découplage (20),
dans lequel la chambre auxiliaire (D) et le clapet de découplage sont disposés dans la première armature (3), le dispositif de commande (15) étant porté par ladite première armature,
dans lequel la première armature (3) comporte un évidement (16) qui reçoit le dispositif de commande (15) et qui s'étend selon l'axe central (Z) entre des première et deuxième extrémités débouchant respectivement dans la chambre de travail et à l'air libre, la première extrémité étant obturée par la membrane de découplage (20),
et le dispositif de commande (15) est **caractérisé en ce qu'**il comporte un boîtier (22) qui est emboîté dans ledit évidement (16) et comporte un fond (22b) délimitant la chambre auxiliaire (D) avec la membrane de découplage (20).

2. Support antivibratoire selon la revendication 1, dans lequel le dispositif de commande (15) est également contenu dans la première armature (3).

3. Support antivibratoire selon la revendication 1 ou 2, dans lequel la membrane de découplage (20) est formée d'une seule pièce avec le corps en élastomère (4).

4. Support antivibratoire selon l'une quelconque des revendications précédentes, dans lequel la chambre auxiliaire (D) est une chambre pneumatique et le dispositif de commande (15) est adapté pour sélectivement soit mettre à l'air libre ladite chambre auxiliaire (D), soit vider ladite chambre auxiliaire de façon à bloquer ladite membrane de découplage (20).

5. Support antivibratoire selon la revendication 4, dans lequel le dispositif de commande (15) comporte un clapet de sortie d'air (31-33) autorisant normalement uniquement une sortie d'air depuis la chambre auxiliaire (D) vers l'atmosphère et non l'inverse, et un dispositif de mise à l'air (24) actionnable pour sélectivement mettre à l'air libre ladite chambre auxiliaire (D)P).

6. Support antivibratoire selon la revendication 5, dans lequel le clapet de sortie d'air (31-33) et le dispositif de mise à l'air (24) sont contenus dans un logement (23) délimité par le boîtier (22) du dispositif de commande, ce logement (23) étant ouvert à l'opposé du fond (22b) et recouvert par un couvercle (25) fixé sur la première armature (3).

7. Véhicule automobile comportant un moteur (M), une caisse (CA) et au moins un support antivibratoire (1) selon l'une quelconque des revendications précédentes pour relier le moteur (M) à la caisse (CA).

8. Véhicule selon la revendication 7, dans lequel la première armature (3) est liée au moteur (M), la deuxième armature (5) est liée à la caisse (CA), et la première armature (3) étant disposée au-dessus de la deuxième armature (5).

9. Véhicule selon la revendication 7, dans lequel la deuxième armature (5) est liée au moteur (M), la première armature (3) est liée à la caisse (CA), et la deuxième armature (5) est disposée au-dessus de la première armature (3).

## Patentansprüche

1. Steuerbares hydraulisches schwingungsdämpfendes Lager, das vorgesehen ist, zu Dämpfungszwecken zwischen einem ersten und einem zweiten starren Element (M, CA) angeordnet zu werden, wobei dieses schwingungsdämpfende Lager aufweist:
- eine erste und eine zweite Bewehrung (3, 5), die an den zwei zu vereinigenden starren Elementen anzubringen sind, wobei die erste Bewehrung (3) die Form einer Klemme hat und die zweite Bewehrung (5) eine bezüglich einer zentralen Achse (Z) zentrierte Ringform hat, wobei die erste Bewehrung (3) im Wesentlichen an der zentralen Achse (Z) angeordnet ist,
- einen Elastomerkörper (4), der die erste und zweite Bewehrung (3, 5) miteinander verbindet und der zumindest teilweise eine Arbeitskammer (A) begrenzt, wobei der Elastomerkörper (4) eine Glockenform hat, die einen mit der ersten Bewehrung (3) fest verbundenen Scheitel (4a) und eine mit der zweiten Bewehrung (5) fest verbundene ringförmige Basis (4b) hat,
- eine verformbare Kompensationskammer (B), die über einen engen Kanal (C) mit der Arbeitskammer (A) in Verbindung steht, wobei die Kompensationskammer (B), die Arbeitskammer (A) und der erste enge Kanal (C) ein mit Flüssigkeit gefülltes hydraulisches Volumen bilden, wobei der erste enge Kanal eine Resonanzfrequenz zwischen 5 und 20 Hz hat,
- eine Hilfskammer (D),
- eine Entkopplungsklappe mit einer Entkopplungsmembran (20) aus Elastomer, die die Arbeitskammer (A) und die Hilfskammer (D) trennt, wobei die Entkopplungsklappe geeignet ist, Schwingungen bei gewissen Frequenzen oberhalb von 20 Hz zu absorbieren,
- eine Steuervorrichtung (15) mit einem Aktuator (24), der eingerichtet ist, die Entkopplungsmembran (20) selektiv zu blockieren,
wobei die Hilfskammer (D) und die Entkopplungsklappe in der ersten Bewehrung (3) angeordnet sind und die Steuervorrichtung (15) von der ersten Bewehrung getragen wird,
wobei die erste Bewehrung (3) eine Aussparung (16) aufweist, die die Steuervorrichtung (15) aufnimmt und die sich entlang der zentralen Achse (Z) zwischen einem ersten und einem zweiten Ende erstreckt, die in die Arbeitskammer bzw. ins Freie münden, wobei das erste Ende von der Entkopplungsmembran (20) verschlossen wird,
und die Steuervorrichtung (15) **dadurch gekennzeichnet ist, dass** sie ein Gehäuse (22) aufweist, das in der Aussparung (16) eingesetzt ist und einen Boden (22b) aufweist, der zusammen mit der Entkopplungsmembran (20) die Hilfskammer (D) begrenzt.

2. Schwingungsdämpfendes Lager nach Anspruch 1, wobei die Steuervorrichtung (15) auch in der ersten Bewehrung (3) enthalten ist.

3. Schwingungsdämpfendes Lager nach Anspruch 1 oder 2, wobwi die Entkopplungsmembran (20) aus einem Stück mit dem Elastomerkörper (3) gebildet ist.

4. Schwingungsdämpfendes Lager nach einem der vorstehenden Ansprüche, wobei die Hilfskammer (D) eine pneumatische Kammer ist und die Steuervorrichtung (15) wahlweise eingerichtet ist, entweder die Hilfskammer (D) der freien Luft auszusetzen oder die Hilfskammer zu leeren, um auf diese Weise die Entkopplungsmembran (20) zu blockieren.

5. Schwingungsdämpfendes Lager nach Anspruch 4, wobei die Steuervorrichtung (15) aufweist: eine Luftaustrittsklappe (31-33), die normalerweise einen Luftaustritt nur von der Hilfskammer (D) zur Atmosphäre und nicht umgekehrt erlaubt, und eine Lüftungsvorrichtung (24), die betätigbar ist, um die Hilfskammer (D) selektiv der freien Luft auszusetzen.

6. Schwingungsdämpfendes Lager nach Anspruch 5, wobei die Luftaustrittsklappe (31-33) und die Lüftungsvorrichtung (24) in einer von dem Gehäuse (22) der Steuervorrichtung begrenzten Aufnahme enthalten sind, wobei diese Aufnahme (23) auf der dem Boden (22b) gegenüberliegenden Seite offen ist und mit einem an der ersten Bewehrung (3) angebrachten Deckel (25) abgedeckt ist.

7. Automobilfahrzeug, aufweisend einen Motor (M), eine Karosserie (CA) und mindestens ein schwingungsdämpfendes Lager (1) nach einem der vorstehenden Ansprüche, um den Motor (M) mit der Karosserie (CA) zu verbinden.

8. Fahrzeug nach Anspruch 7, wobei die erste Bewehrung (3) mit dem Motor (M) verbunden ist, die zweite Bewehrung (5) mit der Karosserie (CA) verbunden ist und die erste Bewehrung (3) oberhalb der zweiten Bewehrung (5) angeordnet ist.

9. Fahrzeug nach Anspruch 7, wobei die zweite Bewehrung (5) mit dem Motor (M) verbunden ist, die erste Bewehrung (3) mit der Karosserie (CA) verbunden ist und die zweite Bewehrung (5) oberhalb der ersten Bewehrung (3) angeordnet ist.

## Claims

1. Controllable hydraulic vibration-damping support intended to be interposed for purposes of damping between first and second rigid elements (E, BO), this vibration-damping support comprising:
- first and second strength members (3,5) intended to be secured to the two rigid elements to be connected, the first strength member (3) having the form of a block and the second strength member (5) being of annular shape centred on a central axis (Z), the first strength member (3) being arranged substantially on said central axis (Z),
- an elastomer body (4) which links together the first and second strength members (3,5) and which delimits at least partially a working chamber (A), the elastomer body (4) having a bell shape, with a top (4a) firmly fixed to the first strength member (3) and an annular base (4b) firmly fixed to the second strength member (5),
- a deformable compensation chamber (B) which communicates with the working chamber (A) via a constricted passageway (C), the compensation chamber (B), the working chamber (A) and the first constricted passageway (C) forming a hydraulic volume filled with liquid, the first constricted passageway having a resonance frequency comprised between 5 and 20 Hz,
- an auxiliary chamber (D),
- a decoupling valve comprising an isolating diaphragm (20) made of elastomer, which separates the working chamber (A) and the auxiliary chamber (D), said decoupling valve being adapted for absorbing vibrations at certain frequencies greater than 20 Hz,
- a control device (15) comprising an actuator (24) adapted for selectively locking the isolating diaphragm (20),
wherein the auxiliary chamber (D) and the decoupling valve are arranged in the first strength member (3), the control device (15) being carried by said first strength member, wherein the first strength member (3) comprises a recess (16) which receives the control device (15) and which extends along the central axis (Z) between first and second ends opening respectively into the working chamber and to the open air, the first end being closed by the isolating diaphragm (20),
and the control device (15) is **characterized in that** it comprises a casing (22) which is fitted into said recess (16) and comprises a base (22b) delimiting the auxiliary chamber (D) with the isolating diaphragm (20).

2. Vibration-damping support according to claim 1, in which the control device (15) is also contained in the first strength member (3).

3. Vibration-damping support according to claim 1 or 2, in which the isolating diaphragm (20) is formed in a single piece with the elastomer body (4).

4. Vibration-damping support according to any one of the preceding claims, in which the auxiliary chamber (D) is a pneumatic chamber and the control device (15) is adapted for selectively either venting said auxiliary chamber (D), or emptying said auxiliary chamber so as to lock said isolating diaphragm (20).

5. Vibration-damping support according to claim 4, in which the control device (15) comprises an air check valve (31-33) normally only allowing air to escape from the auxiliary chamber (D) to the atmosphere and not the reverse, and a venting device (24) selectively operable for venting said auxiliary chamber (D) to the open air.

6. Vibration-damping support according to claim 5, in which the air check valve (31-33) and the venting device (24) are contained in a housing (23) delimited by the casing (22) of the control device, this housing (23) being open opposite the base (22b) and covered by a cover (25) secured on the first strength member (3).

7. Motor vehicle comprising an engine (E), a body (BO) and at least one vibration-damping support (1) according to any one of the preceding claims for attaching the engine (E) to the body (BO).

8. Vehicle according to claim 7, in which the first strength member (3) is connected to the engine (E), the second strength member (5) is connected to the body (BO), and the first strength member (3) being arranged above the second strength member (5).

9. Vehicle according to claim 7, in which the second strength member (5) is connected to the engine (E), the first strength member (3) is connected to the body (BO), and the second strength member (5) is arranged above the first strength member (3).
